# EUROPEAN PATENT SPECIFICATION

(11) **EP 2 566 898 B1**
(45) Date of publication and mention of the grant of the patent: **11.11.2015**
(21) Application number: 11724837.7
(22) Date of filing: 03.05.2011
(51) Int. Cl.: C08F 110/02, C08J 3/12, C08J 9/24, B01D 39/16, B43K 1/00, C02F 3/20, C08F 10/02

(54) **POLYETHYLENE POWDERS AND POROUS ARTICLES PRODUCED THEREFROM**
POLYETHYLENPULVER UND DARAUS HERGESTELLTE PORÖSE ARTIKEL
POUDRES DE POLYÉTHYLÈNE ET ARTICLES POREUX FABRIQUÉS À PARTIR DE CES POUDRES

(30) Priority: 03.05.2010 US 330535 P; 22.10.2010 US 405868 P
(43) Date of publication of application: 13.03.2013
(73) Proprietor: Ticona LLC, Florence, KY 41042 (US)
(72) Inventor: SRINIVASAN, Ramesh, Cincinnati OH 45244 (US); HUFEN, Julia, 47495 Rheinberg (DE); FORSCHLER, Bernhard, 64287 Darmstadt (DE); RINKER, Bjorn, 46569 Hunxe (DE); EHLERS, Jens, 46499 Hamminkeln (DE); WANG, Louie, Raritan NJ 08869 (US); BHOR, Rajesh, Dist:Thane 401104 (IN); BURKE, Peter, Chester CH4 9NR (GB); GUSIK, Meinhard, 46147 Oberhausen (DE); SHEN, Yu, Shanghai City (CN)
(74) Representative: Serravalle, Marco
(86) International application number: PCT/US2011/034947
(87) International publication number: WO 2011/140053

(56) References cited:
- GB-A- 2 077 272
- JP-A- 60 158 205
- US-A1- 2004 110 853
- US-A1- 2007 225 390

## Description

### FIELD

The present invention relates to polyethylene powders and porous, sintered articles produced therefrom.

### BACKGROUND

Ultra-high-molecular weight polyethylene (UHMW-PE), high-density polyethylene (HDPE) and low-density polyethylene (LDPE) have all been used to produce porous molded articles. Examples of such articles include filter funnels, immersion filters, filter crucibles, porous sheets, pen tips, marker nibs, aerators, diffusers and light weight molded parts.

LDPE and HDPE, which include polyethylenes of molecular weight up to 250,000 g/mol, yield good part strength but their melt behavior results in a narrow processing window with respect to both time and temperature. As result, molded articles produced therefrom tend to be of reduced porosity and inconsistent quality. Furthermore, with LDPE or HDPE as the molding material, non-uniformity of heating within molds having complex geometric conduits tends to result in non-uniformity in the porosity of the molded article.

In contrast to LDPE and HDPE, UHMW-PE formulations, with an average molecular weight above 2,500,000 g/mol, can be processed over a wide range of time and temperature. Moreover, these high molecular weight polyethylenes are valued for properties such as chemical resistance, impact resistance, abrasion resistance, water absorption, energy absorption, heat deflection, and sound-dampening capabilities. However, since UHMW-PE seldom exhibits flowability even in the molten state, processing by conventional techniques, such as injection molding, is impossible. In addition, porous articles produced UHMW-PE tend to be weak and brittle.

There is therefore significant interest in developing new polyethylene powders which combine the processing advantages of UHMW-PE resins with the strength properties of LDPE and HDPE resins.

United States Patent No. 4,962,167 to Shiraishi et al. discloses a process for making ultra-high-molecular weight polyethylene powder by polymerizing ethylene using a solid catalyst component and an organometallic compound. The resultant polyethylene powder is reported to have a molecular weight of 600,000 to 12,000,000, a bulk density from 0.30 g/cc to 0.34 g/cc with particle diameters ranging from 195 to 245 microns.

United States Patent No. 4,972,035 to Suga et al. discloses ultra-high-molecular-weight polyolefin fine powder having an intrinsic viscosity measured in decalin at 135 °C of at least 10 dl/g (corresponding to a molecular weight of at least about 1,660,000) and an average particle diameter in the range of 1-80 µm such that at least 20 weight % of the powder passes through 350 Tyler mesh screen.

United States Patent No. 5,587,440 to Ehlers et al. discloses a method for making polyethylene powder with a molecular weight of at least 1,000,000 g/mol, preferably 2,500,000 g/mol to about 10,000,000 g/mol, and a bulk density ranging from 350 to 460 g/liter using a catalyst comprising an organic aluminum compound and a titanium component prepared by reduction of a Ti(IV) compound and after-treatment of the reduction product thereof with an organic aluminum compound.

United States Patent No. 5,977,229 to Barth et al. discloses a hydrophilically modified high and/or ultra-high molecular weight polyethylene powder having an average particle diameter of 3 to 3000 µm, preferably 10 to 1000 µm, and in particular 30 to 300 µm. The Examples employ GUR^{®} 4020 and 2122, commercially available from Ticona LLC (Florence, KY), as the UHMW-PE material.

United States Patent Application Publication No. 2004/0110853 to Wang et al. discloses a process for forming a porous article from a molding powder comprising polyethylene polymer particles having a single modal molecular weight distribution in the range of about 800,000 g/mol to about 3,500,000 g/mol as determined by ASTM-D 4020. The particle size distribution of the particles of the polyethylene polymer is within the range of about 10 microns to about 1000 microns. Commercially available of resins exemplified as being useful in this process are GUR^{®} 4012 and 4022, produced by Ticona LLC (Florence, KY), which have molecular weights of 1,200,000 and 2,600,000 g/mol respectively, a particle size of 120 to 150 microns and a powder bulk density in the range of 0.38 to 0.55 g/cm³. Porous plaques produced from these resins are reported have an average pore size of 14 to 18 microns and a pressure drop of 19 to 27 mbar.

United States Patent Application Publication No. 2007/0225390 to Wang et al. discloses a polyethylene polymer molding powder having a molecular weight in the range of from about 600,000 g/mol to about 2,700,000 g/mol as determined by ASTM 4020. The average particle size of the particles of the polyethylene polymer is within the range of from about 5 microns to about 1000 microns and the polyethylene has a powder bulk density in the range of from about 0.10 to about 0.30 g/cc. The molding powder employed in the Examples has a molecular weight of 1,300,000 g/mol, an average particle size of 108 microns and a powder bulk density of 0.22 g/cc. On sintering this powder produced porous plaques having an average pore size of 54 to 69 microns and a pressure drop of 4 to 5 mbar.

United States Patent No. 7,141,636 to Ehlers et al. discloses a process for preparing a homopolymer and/or copolymer having an irregular particle structure and a melt flow index (MFR 190/15) of from 1.3 g/10 min to 10 g/10 min (corresponding to a molecular weight of about 250,000 to about 500,000 g/mol), a molecular weight distribution Mw/Mn of from 3 to 30, a bulk density of from 0.05 g/cc to 0.4 g/cc and a particle size of from 5 µm to 300 µm, which comprises polymerizing the monomers in the presence of a mixed catalyst comprising a titanium component and an organic aluminum compound and the presence of a molar mass regulator.

International Patent Publication No. WO85/04365 discloses a molding composition comprising an ultra-high-molecular weight (> 1,000,000 g/mol) polyethylene powder which has been passed through a pellet or roll mill to increase its bulk density to greater than 0.5 g/cc and to eliminate any fine structure on the surface of the powder.

International Patent Publication No. WO2009/127410 discloses a process for producing UHMW-PE powder having a molecular weight of 1,000,000 to about 10,000,000 g/mol, a bulk density within the range of about 100 to 350 grams per liter and irregular particles having an average size (D₅₀) between 50 and 250 µm and a span (D₉₀-D₁₀/D₅₀) greater than 1 in the presence of a catalyst system comprising (I) the solid reaction product obtained from the reaction of: a) a hydrocarbon solution containing 1) an organic oxygen containing magnesium compound or a halogen containing magnesium compound and 2) an organic oxygen containing titanium compound and b) an organo aluminium halogen compound having the formula AlRₙX₃₋ₙ in which R is a hydrocarbon radical containing 1 - 10 carbon atoms, X is halogen and 0<3<n and (II) an aluminium compound having the formula AIR₃ in which R is a hydrocarbon radical containing 1 - 10 carbon atom.

Mitsui Japanese Published Patent Application JP 60158205 A discloses a method for producing an ultrahigh molecular weight ethylene-type polymer powder having a limiting viscosity [η] of at least 5 dl/g measured in decalin at 135°C (corresponding to a molecular weight of at least about 590,000 g/mol), a content of up to 10% of powder having a particle diameter of at least 840 µ based on the entire powder, a content of at least 90% of powder having a particle diameter between 44 and 840 µ based on the entire powder, an average particle diameter in the range of 200 to 700 µ and a bulk density of at least 0.30 g/cm³. All the materials exemplified have a limiting viscosity [η] of at least 15 dl/g measured in decalin at 135°C (corresponding to a molecular weight of at least about 3,000,000 g/mol).

Asahi Japanese Published Patent Application JP 62142629 A describes a sintered filter from powdered polyethylene resin of the Sunfine SH family having a melt index of 0.01 to 0.2 g/10 min (corresponding to a molecular weight of about 320,000 to about 550,000 g/mol) and a particle distribution such that at 90 wt% of the particles have a diameter in the range of 100 to 800 µm. The mean pore diameter of the porous filter is 20 to 200 µm and its mean porosity is 40 to 60 %.

According to the present invention, a novel polyethylene powder has been produced which has a molecular weight between that of HDPE and UHMW-PE, large particles and a relatively high bulk density and which can be sintered to produce sintered articles having a high degree of porosity, very low pressure drop and excellent physical properties. The powder has good flow properties, can be shaped easily by conventional techniques and has a broad processing window with regard to time and temperature.

### SUMMARY

In one aspect, the invention resides in a polyethylene powder having a molecular weight in the range of 300,000 g/mol to 2,000,000 g/mol as determined by ASTM-D 4020, an average particle size, D₅₀, between 300 and 1000 µm, and a bulk density between 0.25 and 0.5 g/ml.

Conveniently, the polyethylene powder has a molecular weight in the range of 400,000 g/mol to 1,800,000 g/mol, such as 500,000 g/mol to 1,500,000 g/mol, as determined by ASTM-D 4020.

Conveniently, the polyethylene powder has an average particle size, D₅₀, between 300 and 800 µm.

Conveniently, the polyethylene powder has a bulk density between 0.32 g/ml and 0.48 g/ml.

Conveniently, the dry polyethylene powder flows through a 15 mm nozzle in a period of no more than 15 seconds.

In a further aspect, the invention resides in a process for producing the polyethylene powder described herein, the process comprising polymerizing ethylene in the slurry phase with a supported Ziegler-Natta catalyst system comprising titanium and aluminum and having an average particle size, D₅₀, between 10 and 50 µm.

In another aspect, the invention resides in a porous article produced by sintering the polyethylene powder described herein and having a porosity of at least 45% and a pressure drop less than 5mbar.

Conveniently, the sintered article has a pressure drop less than 4 mbar, such as 2 mbar or less.

Conveniently, the sintered article has an average pore size of at least 100 µm, typically 100 to 200 µm.

### BRIEF DESCRIPTION OF THE DRAWINGS

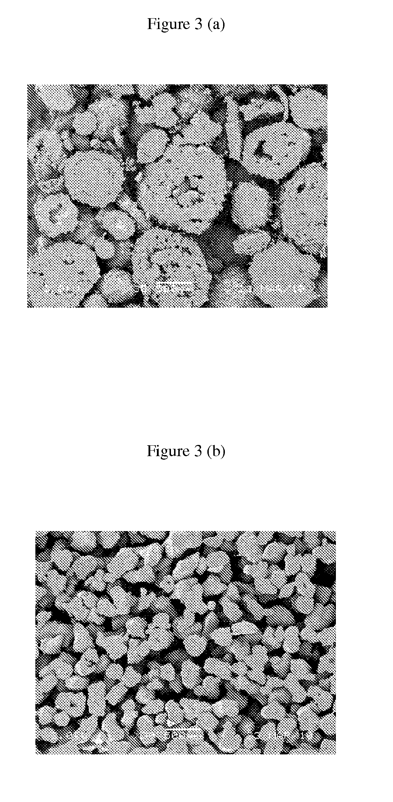

Figures 1(a), 2(a) and 3 (a) are scanning electron micrographs of a polyethylene powder [Figure 1(a)] commercially available from LyondellBasell Industries as Lupolen® and of the surface [Figure 2(a)] and a cross-section [Figure 3(a)] of a sintered plaque produced from the powder.
Figures 1(b), 2(b) and 3 (b) are scanning electron micrographs of the polyethylene powder [Figure 1(b)] produced according to Polymerization Example 5 and of the surface [Figure 2(b)] and a cross-section [Figure 3(b)] of a sintered plaque produced from the powder according to Formulation Example 11.

### DETAILED DESCRIPTION

Described herein is a coarse polyethylene powder having a molecular weight between that of HDPE and UHMW-PE, its production by Ziegler-Natta catalysis and its use to produce porous sintered articles having a high degree of porosity, very low pressure drop and excellent physical properties.

### Polyethylene Powder

The present polyethylene powder has a molecular weight in the range of 300,000 g/mol to 2,000,000 g/mol, often in the range of 400,000 g/mol to 1,800,000 g/mol, and generally in the range of 500,000 g/mol to 1,500,000 g/mol, as determined by ASTM-D 4020. The powder may have a monomodal molecular weight distribution or a bimodal molecular weight distribution, in the latter case with a first part of the powder having a molecular weight in the range of 100,000 g/mol to 300,000 g/mol and a second part powder having a molecular weight in the range of 600,000 g/mol to 5,000,000 g/mol. Generally, the amount of the second lower molecular weight fraction is in the range of 0 to 40%.

In addition, the present polyethylene powder has an average particle size, D₅₀, between 300 and 1000 µm, generally between 300 and 800 µm.
Typically, the polyethylene powder is composed of generally spherical particles and exhibits a relatively narrow particle size distribution, such that the powder has a span (D₉₀-D₁₀/D₅₀) of less than 1.5, such 0.2 to 1.4, for example 0.4 to 1.3 . This is important because narrow particle size reduces the loss of polymer material in any post-synthesis sieving and also assists in producing sintered products with a high average pore size. In this respect, the polyethylene powder particle size measurements referred to herein are obtained by a laser diffraction method according to ISO 13320.

The bulk density of the present polyethylene powder is typically between 0.25 and 0.5 g/ml, generally between 0.30 and 0.48 g/ml, especially between 0.32 and less than 0.45 g/ml. Polyethylene powder bulk density measurements referred to herein are obtained by DIN 53466.

Another important property of the present polyethylene powder is its dry flow properties, that is the ability of the dry powder to flow through a confined space. This property is important since it determines how quickly the powder can be molded into a desired shape. In particular, the dry polyethylene powder is generally able to flow through a 15 mm nozzle in a period of no more than 15 seconds. Such a test is performed according to DIN EN ISO 6186.

The present polyethylene powder can be formed of a polyethylene homopolymer or a copolymer of ethylene with up to 20 wt% of one or more other alpha-olefins, typically selected from propylene, 1-butene, 1-pentene, 1-hexene, 1- octene, 1-decene, 1-dodecene, 3-methyl-1-pentene, 4-methyl-1-pentene and mixtures thereof.

### Production of the Polyethylene Powder

The polyethylene powder employed herein is typically produced by the catalytic polymerization of ethylene, optionally with one or more other alpha-olefin comonomers, using a heterogeneous catalyst and an alkyl aluminum compound as a cocatalyst. Preferred heterogeneous catalysts include Ziegler-Natta type catalysts, which are typically halides of transition metals from Groups IV-VIII of the Periodic Table reacted with alkyl derivatives of metals or hydrides from Groups I-III. Exemplary Ziegler catalysts include those based on the reaction products of aluminum and magnesium alkyls and titanium tetrahalides [0036] The heterogeneous catalyst may be unsupported or supported on silica, magnesium chloride and other porous fine grained materials. Generally, silica-supported catalysts are preferred, as are the use of catalysts in suspension.
Granular catalysts, like Sylopol 5917, are generally preferred over spherical catalyst, like Sylopol 5951, due to the mechanical integrity of the former. As an alternative the mechanical integrity of the catalyst particles may be stabilized through an additional process step, the prepolymerization. Preferred catalysts have a particle size, D₅₀, in the range of 10 to 60 µm, especially 15 to 40 µm, such as 15 to 35 µm. Catalysts with particle sizes less than 10 to 15 µm generally require excessively long polymerization times to produce the desired polymer particle size, while spherical catalyst particles coarser than about 50 µm tend to fall apart during storage, feeding and the polymerization process with strong negative impact on the desired narrow polymer particle size distribution during the entire production process.

Prior to its introduction into the polymerization reactor, the heterogeneous catalyst is generally combined with an alkyl aluminum compound, conveniently by suspending the solid catalyst in an organic solvent and then contacting the catalyst with the alkyl aluminum compound. Suitable alkyl aluminum compounds include triisobutylaluminum, triethylaluminum, isoprenylaluminium, aluminoxanes and halide-containing species and mixtures thereof. Generally, where the main catalyst component is a titanium-containing compound, the amount of alkyl aluminum compound employed is such as to provide an atomic ratio of Al:Ti of 0.001:1 to 200:1, especially 0.1:1 to 80:1, in the catalyst/alkyl aluminum compound combination. The preferred alkyl aluminium is triisobutylaluminum or triethylaluminum and is added to provide an overall catalyst system (catalyst/alkyl aluminum compound combination) with an Al:Ti ratio of 1:1 to 50:1, such as 2:1 to 50:1, preferably 2:1 to 30:1.

In addition, an alkyl aluminum co-catalyst is generally added to the polymerization reactor with the heterogeneous catalyst. Suitable alkyl aluminum cocatalysts include triisobutylaluminum, triethylaluminum, isoprenylaluminium, aluminoxanes and halide-containing species and mixtures thereof, with triethylaluminum, triisobutylaluminum and isoprenylaluminium being preferred. Generally, where the main catalyst component is a titanium-containing compound, the amount of alkyl aluminum cocatalyst added to the polymerization reactor is such as to provide an Al:Ti ratio of 1:1 to 800:1, preferably 5:1 to 500:1, in the reactor.

The polymerization reaction may be carried out at a temperature in the range of between 30°C and 130°C, more typically in the range of between 50°C and 100°C, especially in the range of between 50°C and 90°C and an ethylene pressure in the range of between 0.05 and 50 MPa, such as between 0.05 and 10 MPa, typically between 0.05 and 2MPa.

The polymerization may be conducted in the gaseous phase in the absence of a solvent or, more preferably, is performed in the slurry phase in the presence of an organic diluent. Suitable diluents include butane, pentane, hexane, cyclohexane, nonane, decane, or higher homologues and mixtures thereof. The polymerization may be carried out batchwise or in continuous mode in one or multiple steps. The molecular weight of the polymer may be controlled by feeding hydrogen to the polymerization reactor. Generally the amount of hydrogen added is such that the ratio of hydrogen to ethylene in the reactor feed is in the range of 0.5 to 100 vol% hydrogen/MPa ethylene, and preferably the range of 2 to 20 vol% hydrogen/MPa ethylene for the single step reaction.

The average polymer particle size is controlled through the polymer yield per catalyst feed. The bulk density may be controlled though the kind of pretreatment of the catalyst with aluminium alkyl, the ratio of cocataylst versus catalyst and the residence time in the polymerization reactor.

The average polymerization time is in the range of 1 to 12 hour, generally 2 to 9 hours. The overall catalyst consumption in the polymerization is in range of 0.01 to 1, typically 0.02 to 0.6 mmol of Ti per kilogram of polymer.

The polymerization may be carried out in a single step or in multiple steps. For example, to produce a polymer with a bimodal molecular weight distribution, it is preferred to produce the higher molecular weight fraction in a first step, optionally followed by a second step to produce the lower molecular weight fraction within individual higher molecular weight polymer particles.

When polymerization is complete, the ethylene polymer is isolated and dried in a fluidized bed drier under nitrogen. Any high boiling point solvent may be removed by steam distillation. Salts of long chain fatty acids may be added to the polymer powder as a stabilizer. Typical examples are calcium, magnesium and zinc stearate. Additional materials may be added to the polymer powder, depending on the desired properties of the porous sintered article. For example, it may be desirable to combine the polyethylene powder with activated carbon for filtering applications. The powder may also contain additives such as lubricants, dyes, pigments, antioxidants, fillers, processing aids, light stabilizers, neutralizers, antiblock, and the like. Preferably, the molding powder consists essentially of polyethylene polymer, such that additional materials do not alter the basic and novel characteristics of the powder, namely its processing flexibility and its suitability for forming articles with superior porosity and mechanical strength.

### Production of Porous Articles

Porous articles may be formed by a free sintering process which involves introducing the polyethylene polymer powder described above into either a partially or totally confined space, e.g., a mold, and subjecting the molding powder to heat sufficient to cause the polyethylene particles to soften, expand and contact one another. Suitable processes include compression molding and casting. The mold can be made of steel, aluminum or other metals. The polyethylene polymer powder used in the molding process is generally ex-reactor grade, by which is meant the powder does not undergo sieving or grinding before being introduced into the mold. The additives discussed above may of course be mixed with the powder.

The mold is heated in a convection oven, hydraulic press or infrared heater to a sintering temperature between 140° C and 300° C, such as between 160° C and 300° C, for example between 170° C and 40° C to sinter the polymer particles. The heating time and temperature vary and depend upon the mass of the mold and the geometry of the molded article. However, the heating time typically lies within the range of 25 to 100 minutes. During sintering, the surface of individual polymer particles fuse at their contact points forming a porous structure. Subsequently, the mold is cooled and the porous article removed. In general, a molding pressure is not required. However, in cases requiring porosity adjustment, a proportional low pressure can be applied to the powder.

The resultant porous sintered article has a porosity of at least 45% and a pressure drop of less than 5 mbar. Generally, the porous sintered article has a pressure drop less of than 4 mbar, such as 2 mbar or less. In this respect, the porosity values cited herein are determined by mercury intrusion porosimetry according to DIN 66133. Pressure drop values are measured using a sample of the porous article having a diameter of 140mm, a width of 6.2-6.5mm (depending on shrinkage) and an airflow rate of 7.5 m³/hour and measuring the drop in pressure across the width of the sample.

Generally, the sintered article has an average pore size of 30 to 330 µm, typically 100 to 200 µm, as determined according to DIN ISO 4003, to ensure a low pressure drop.

In another embodiment, a porous sintered article is produced from a mixture comprising (all on weight basis) 50 to 96%, preferably 70 to 90%, of a first polyethylene powder, produced according to the present disclosure, and from 4% to 50%, preferably 10 to 30% of a second polyethylene powder having a D₅₀ which is 30 to 200 microns, such as 50 to 150 microns, such as 70 to 120 microns, less than the D₅₀ of the first polyethylene powder, which mixture is sintered in a shaping mold. Conveniently, the second polyethylene powder is an HDPE or UHMWPE powder. Optionally the mixture further comprises activated carbon particles dispersed throughout. In this way, by varying the level of the first and second polyethylene powders and their respective D50's, it is possible to produce porous sintered articles with precisely tailored porosities and pressure drop properties. It is also possible to produce composite sintered articles from layers of different polyethylene powders which have different particles sizes and which, on sintering, produce an article having layers of different pore size, porosity and/or pressure drop.

### Uses of Porous Articles

The properties of the porous sintered articles produced from the present polyethylene powder make them useful in a wide variety of applications. Specific examples include wastewater aeration, capillary applications and filtration.

Aeration is the process of breaking down wastewater using microorganisms and vigorous agitation. The microorganisms function by coming into close contact with the dissolved and suspended organic matter. Aeration is achieved in practice by the use of "aerators" or "porous diffusers". Aerators are made from many different materials and come in a few widely accepted shapes and geometries. The three main types of materials currently used in the manufacture of aerators are ceramics (including aluminum oxide, aluminum silicates and silica), membranes (mostly elastomers like ethylene/propylene dimers - EPDM) and plastics (mostly HDPE).

The present porous articles provide attractive replacements for ceramic, membrane and HDPE aerators due to the fact the tighter control on particle size distribution and bulk density leads to the production of aerators with tightly controlled pores, consistent flow rates, larger bubble sizes and lower pressure drops. In addition, the incorporation UV stabilizer and/or antimicrobial additives should allow the performance of the present sintered porous polyethylene aerators to be further improved beyond that of existing aerators. Thus, the incorporation of UV stabilizers can be used to extend the life expectancy of the present aerators in outdoor environments, whereas the addition of antimicrobial agents should prevent fouling on the aerator surface, thereby allowing the aerators to perform at peak efficiency for longer periods.

Capillary applications of the present porous sintered articles include writing instruments, such as highlighters, color sketch pens, permanent markers and erasable whiteboard markers. These make use of the capillary action of a porous nib to transport ink from a reservoir to a writing surface. Currently, porous nibs formed from ultra-high molecular weight polyethylene are frequently used for highlighters and color sketch pens, whereas permanent and whiteboard markers are generally produced from by polyester (polyethylene terephthalate), polyolefin hollow fibers and acrylic porous materials. The large pore size of the present sintered articles make them attractive for use in the capillary transport of the alcohol-based high-viscosity inks employed in permanent markers and white board markers.

With regard to filtration applications, the present porous sintered articles are useful in, for example, produced water (drilling injection water) filtration. Thus, in crude oil production water is often injected into an on-shore reservoir to maintain pressure and hydraulically drive oil towards a producing well. The water being injected has to be filtered so that it does not prematurely plug the reservoir or equipment used for this purpose. In addition as oil fields mature, the generation of produced water increases. Porous tubes made from the present polyethylene powder are ideal filtration media for produced water filtration because they are oleophilic, they can form strong and stable filter elements which are back-washable, abrasion resistant, chemically resistant and have a long service life.

The present porous sintered articles also find utility in other filtration applications, where oil needs to be separated from water, such as filtration of turbine and boiler water for power plants, filtration of cooling water emulsions, de-oiling of wash water from car wash plants, process water filtration, clean-up of oil spills from seawater, separating glycols from natural gas and aviation fuel filters.

Another application of the present porous sintered articles is in irrigation, where filtration of incoming water is necessary to remove the tiny sand particles that can clog sprinkler systems and damage other irrigation devices including pumps. The traditional approach to this issue has been the use of stainless steel screens, complex disc filters, sand media filters and cartridge filters. One of the key requirements of these filters is pore size, which is normally required to range from 100µ to 150µ. Other considerations are high flow rate, low pressure drop, good chemical resistance, high filter strength and long service life. The properties of the present porous sintered articles make them particularly qualified for such use.

A further filtration application is to replace the sediment filters used as pre-filters to remove rust and large sediments in multi-stage drinking water applications where sintered polyethylene filters have shown extended life over the more expensive carbon blocks, reverse osmosis membranes and hollow fiber cartridges. Until now the required sintered part strength of such filters was achievable only by blending LDPE or HDPE together with UHMWPE powder. However, these blends suffer from a number of disadvantages in that the pore size of the sintered filter is reduced and existing UHMWPE powders are unable to produce filters with pore sizes greater than 20 µ and with adequate part strength. In contrast, the present polyethylene powder facilitates the design of sediment filters which exhibit adequate part strength at pore sizes > 30µ and which show superior pore size retention during use at high water velocities.

Other filtration applications of the present porous sintered articles include medical fluid filtration, such as filtration of blood outside the human body, filtration to remove solids in chemical and pharmaceutical manufacturing processes, and filtration of hydraulic fluids to remove solid contaminants.

In a further filtration embodiment, the present polyethylene powder can be used in the production of carbon block filters. Carbon block filters are produced from granular activated carbon particles blended with about 5 wt% to about 80 wt%, generally about 15 wt% to about 25 wt% of a thermoplastic binder. The blend is poured into a mould, normally in the shape of a hollow cylinder, and compressed so as to compact the blended material as much as possible. The material is then heated to a point where the binder either softens or melts to cause the carbon particles to adhere to one another. Carbon block filters are used in a wide variety of applications, including water filtration, for example, in refrigerators, air and gas filtration, such as, the removal of toxic organic contaminants from cigarette smoke, organic vapor masks and gravity flow filtration devices.

The invention will now be more particularly described with reference to the following non-limiting Examples and the accompanying drawings.

### Polymerization Examples 1 and 2

A slurry catalyst is prepared by pouring Sylopol 5917 dry catalyst powder (0.75 mmolTi) into 1 liter of Exxsol D30 (Exxon solvent grade) and adding 30 mmol triisobutylaluminum to result in a Al:Ti atomic ratio of about 40:1 in the catalyst slurry as fed to the reactor. The catalyst slurry is used for the polymerization process after a reaction time of 48-72 hours without any agitation. The slurry is diluted to 15 liters with Exxsol D30 prior to use.

The resultant catalyst is used to conduct a series of single step continuous polymerization runs in a 40 liter reactor with the catalyst feed rate varying between 0.4 and 1.11/h, the ethylene partial pressure varying between 0.28 MPa and 0.7 MPa, the reaction temperature varying between 80 and 85°C and additional triisobutylaluminum being added to the reactor to adjust the Al:Ti ratio in the reactor to either 70:1 (Example 1) and 130:1 (Example 2). Average data from the different polymerization runs are summarized in Table 1.

The polymer powders are separated from the solvent by steam distillation. The resulting powders are dried in a fluidized bed under nitrogen and found to exhibit the properties listed in Table 2.

### Polymerization Examples 3, 5 and 6

A slurry catalyst is prepared by suspending Sylopol 5917 dry catalyst powder (1.4 mmol Ti) into 200 mL of Exxsol D30 (Exxon solvent grade). Without agitation the catalyst suspension obtained could be stored for several days.

An aliquot portion of the catalyst slurry is fed to a 3 liter batch reactor, containing 2 liters of 2mmol/L triisobutylaluminum as cocatalyst in Exxsol D30. Ethylene is fed to the reactor in amounts between about 325g and 425g and is subjected to polymerization under the conditions summarized in Table 1.

The polymer powders are separated from the solvent by suction filtration and are dried in an oven at 85°C. Polymer properties are listed in Table 2.

### Polymerization Example 4

A slurry catalyst is prepared by pouring commercially available TOHO THC dry catalyst powder (1,5 mmolTi) into 1 liter of Exxsol D30 (Exxon solvent grade) and adding 15 mmol triisobutylaluminum to result in a Al:Ti atomic ratio of about 10:1 in the catalyst slurry as fed to the reactor. The catalyst slurry is used for the polymerization process after a reaction time of 48-72 hours without any agitation. The slurry is diluted to 15 liters with Exxsol D30 prior to use.

The resultant catalyst is used to conduct a series of single step continuous polymerization runs in a 40 liter reactor with the catalyst feed rate varying between 0,8 and 1.51/h, the ethylene partial pressure varying between 0.17 MPa and 0.5 MPa, the reaction temperature varying between 77 and 84°C and additional triisobutylaluminum being added to the reactor to adjust the Al:Ti ratio in the reactor to between 15:1 and 35:1. Average data from the different polymerization runs are summarized in Table 1.

The polymer powder is separated from the solvent by steam distillation. The resulting powder are dried in a fluidized bed under nitrogen and found to exhibit the properties listed in Table 2.

**Table 1- Details of the different polymerization runs**

| Example | Catalyst consumption [mmolTi/kgPE] | Temp, °C | Ethylene partial pressure, MPa | Polym. time, hr | Al:Ti | Hydrogen / Ethylene (Vol%H₂/ C₂H₄MPa) |
|---|---|---|---|---|---|---|
| 1 | 0.04 | 83 | 0.5 | 4 | 70 | 8 |
| 2 | 0.025 | 82 | 0.5 | 5 | 130 | 9 |
| 3 | 0.06 | 85 | 0.6 | 2.4 | 200 | 15 |
| 4 | 0.09 | 80 | 0.3 | 5 | 27 | 8 |
| 5 | 0.023 | 85 | 0.7 | 7 | 500 | 9 |
| 6 | 0.047 | 85 | 0.7 | 3 | 200 | 4 |

**Table 2 - Polymer powder properties**

| Example | Molecular Weight (x10⁶ g/mol | d50, µm | Bulk density, g/ml | BET, m²/g |
|---|---|---|---|---|
| 1 | 1.5 | 453 | 0.37 | N/D |
| 2 | 1.2 | 494 | 0.37 | N/D |
| 3 | 0.4 | 300 | 0.36 | N/D |
| 4 | 1.3 | 915 | 0.39 | N/D |
| 5 | 0.84 | 418 | 0.35 | 1.85 |
| 6 | 0.61 | 338 | 0.34 | N/D |

### Formulation Examples 7 to 12

In the following Examples, porous products are prepared from the unblended polyethylene powders of Polymerization Examples 1 to 6 and the physical properties of the products are tested. The results are shown in Table 3.

For comparison, the physical properties of a series of additional porous products produced from a variety of commercially available polyethylene resins are summarized in Table 4.

In each case, test samples are prepared by forming porous plaques with a diameter of 140 mm and a thickness of 6.0-6.5 mm in a suitable mold. The mold is filled with the appropriate polymer and the sides are tapped to settle the powder for uniformity and to improve packing. The top of the mold is leveled, the mold is covered and placed into a convection oven. The polymer is sintered for 30 minutes at a temperature between 170 and 220 °C as reported in Tables 3 and 4. The mold is then removed from the press and cooled quickly. The sample is removed from the mold and allowed to air cool for 40 minutes before being tested.

The data in Table 3 show that the polyethylene powders of the inventive Examples can be sintered to produce porous bodies with a porosity of 47-52%, an average pore size of 115-176 µm and a pressure drop of 2 mbar or less. In contrast, as shown in Table 4, in the case of the conventional polymers given as references, sintering under similar conditions mostly gives products with a porosity of 45% or less. The GUR 2122 polymer gives a product with good porosity, 70%, but with an average pore size of only 50 µm and a pressure drop of 8 mbar. Similarly, although the polymer of Reference Example 1, gives a product with a porosity of 515, its average pore size is only 50 µm and its pressure drop is 8 mbar. The Lupolen 5261 Z material gives a product with a low pressure drop, 1 mbar, but its average pore size is large, 201 µm, its porosity is low, only 30% and very sensitive to sintering conditions.

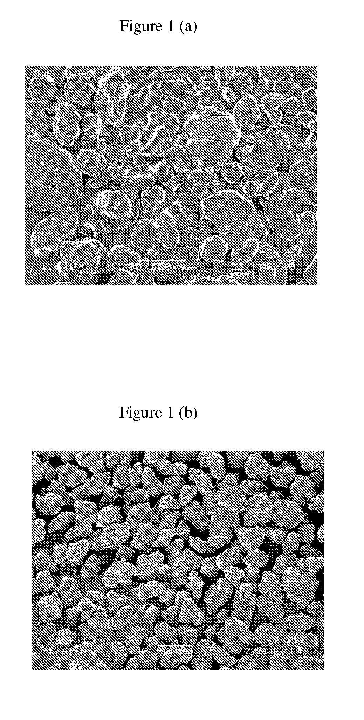

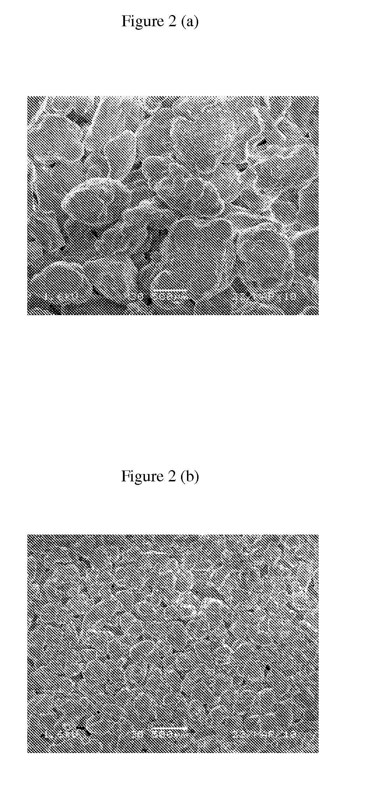

Tables 3 and 4 also list the dry powder flow properties of the powders of the inventive Examples and those of the commercially available polyethylene resins. It will be seen that, with the exception of the Lupolen 5261 Z material and the polymer of Reference Example 1, the flow properties of the prior art materials are generally inferior to those of the present Examples. Figures 1 and 2 compare the microstructure of the powder of Example 3 and the sintered product produced therefrom with that of the Lupolen 5261 Z material. It will be seen that the particles of Example 3 have a more regular shape and size that that of the Lupolen material, which is reflected in a more even pore size distribution at the surface and in the cross-section of the sintered product.

**Table 3**

| Example | MW x 10⁶, g/ml | d50, µm | Sintering Temp., °C | Porosity% | Pore Size (BP), µm | Pore Size (Hg), µm | Dry Powder Flow, see | Pressure Drop, mbar |
|---|---|---|---|---|---|---|---|---|
| 7 | 1.5 | 453 | 220 | 50 | 39 | 115 | 10 (15 mm) | 2 |
| 8 | 1.2 | 494 | 220 | 50 | 56 | 134 | 9 (15 mm) | 1 |
| 9 | 0.4 | 300 | 170 | 48 | 82 | 195 | 9 (15 mm) | 1 |
| 10 | 1.3 | 915 | 220 | 47 | 92 | 145 | 9 (15 mm) | 1 |
| 11 | 0.84 | 418 | 170 | 52 | 69 | 176 | 9 (15 mm) | 1 |
| 12 | 0.61 | 338 | 170 | 52 | 69 | 164 | 9 (15 mm) | 1 |

**Table 4**

| Reference Examples | MW x 10⁶, g/ml | d50, µm | BET, m²/g | Sintering Temp., °C | Porosity % | Pore Size (BP), µm | Pore Size (Hg), µm | Dry Powder Flow, sec | Pressure Drop, mbar |
|---|---|---|---|---|---|---|---|---|---|
| GUR 4012 | 1.2 | 120-150 | 0.32 | 220 | 43 | 18 | 40 | 10 (25 mm) | 27 |
| GUR 4022 | 2.6 | 120 | 0.25 | 220 | 44 | 16 | 35 | 25 (15 mm) | 19 |
| GHR 8110 | 0.6 | 120 | 3.3 | 180 | 39 | 13 | 40 | 30 (15 mm) | 37 |
| GHR 8020 | 0.3 | 220±20 | 0.15 | 170 | 45 | 14 | 133 | 19 (15 mm) | 156 |
| GUR 2122 | 4.5 | 120 | 0.61 | 220 | 70 | 22 | 50 | 10 (25 mm) | 8 |
| GUR 4022-6 | 4 | 330 | 0.53 | 220 | 44 | 60 | 71 | 34 (10 mm) | 7 |
| Lupolen 5261Z | 0.5 | 1025 | | 170 | 30 | 70 | 201 | 6 (15 mm) | 1 |

### Polymerization Examples 13 and 14

In these Examples, the fragility of the catalyst was investigated, using the shear sensitivity in slurry as an indicator. In Example 13, a catalyst slurry is prepared from Sylopol 5917, having an average particle size of 17 µm, whereas in Example 14 a catalyst slurry is prepared from Sylopol 5951, having an average particle size of 55 µm. In both cases the catalyst slurry is prepared by suspending the dry catalyst powder in a solution of 2mmol/L triisobutylaluminum (TIBAL) in Exxsol D30. The concentration is 6.7 mmol Ti / L. 200ml of the catalyst slurry are sheared for 8 hours at 450 rpm with an agitator blade, in a 500ml three necked glass flask at ambient temperature.

An aliquot portion of the catalyst slurry is fed to a 3 liter batch reactor, containing 2 liter 2mmol/L of TIBAL as cocatalyst in Exxsol D30. Ethylene is fed to the reactor in amount of about 340g and a polymerization trial is conducted with 0.1 mmolTi at 80°C and 4 bar ethylene pressure.

As a reference, a separate polymerization trial is conducted using a catalyst slurry prepared as described before, except the slurry is kept under agitation for a maximum of 5 min. The results are summarized in Table 5.

**Table 5**

| Example | Catalyst average particle size, [µm] | Polymer d50 "no shear to catalyst" [µm] | Polymer d50 8hr shear to catalyst [µm] |
|---|---|---|---|
| 13 | 17 | 190 | 175 |
| 14 | 55 | 500 | 220 |

While the present invention has been described and illustrated by reference to particular embodiments, those of ordinary skill in the art will appreciate that the invention lends itself to variations not necessarily illustrated herein. For this reason, then, reference should be made solely to the appended claims for purposes of determining the true scope of the present invention.

## Claims

1. A polyethylene powder having a molecular weight in the range of 300,000 g/mol to 2,000,000 g/mol as determined by ASTM-D 4020, an average particle size, D₅₀, between 300 and 1000 µm, and a bulk density between 0.25 and 0.5 g/ml.

2. The powder of claim 1, wherein the polyethylene has a molecular weight in the range of 400,000 g/mol to 1,800,000 g/mol, preferably 500,000 g/mol to 1,500,000 g/mol, as determined by ASTM-D 4020.

3. The powder of claim 1 or claim 2 and having an average particle size, D₅₀, between 300 and 800 µm.

4. The powder of any preceding claim and having a bulk density between 0.32 and 0.48 g/m.

5. The powder of any preceding claim, wherein the dry polyethylene powder flows through a 15 mm nozzle in a period of no more than 15 seconds.

6. A process for producing the polyethylene powder as claimed in any preceding claim, the process comprising polymerizing ethylene in the slurry phase with a supported Ziegler-latta catalyst system comprising titanium and aluminum and having an average particle size, D₅₀, between 10 and 60 µm, preferably between 15 and 40µm, more preferably between 15 and 35 µm.

7. The process of claim 6, wherein the catalyst system comprises a particulate support comprising silica and/or magnesium chloride.

8. The process of claim 6 or claim 7, wherein the Al:Ti atomic ratio of the catalyst system is from about 1:1 to about 50:1.v

9. A porous article produced by sintering the polyethylene powder as claimed in any one of claims 1 to 5, wherein the sintered article has a porosity of at least 45% and a pressure drop less than 5 mbar, preferably less than 4 mbar, more preferably less than 2 mbar.

10. The article of claim 9 and having an average pore size of at least 100 µm, preferably 100 to 200 µm.

11. The article of claim 9 or claim 10, wherein said sintering is conducted at a temperature between about 140° C and about 300° C for a time of about 25 to about 100 minutes.

12. Use of the article as claimed in any one of claims 9 to 11 in an aerator for waste-water.

13. Use of the article as claimed in any one of claims 9 to 11 in a nib for a writing instrument.

14. Use of the article as claimed in any one of claims 9 to 11 in a filter element.

15. A carbon block filter produced by sintering a blend comprising the polyethylene powder as claimed in any one of claims 1 to 5 and carbon particles.

## Patentansprüche

1. Ein Polyethylenpulver mit einem Molekulargewicht im Bereich von 300.000 g/mol bis 2.000.000 g/mol wie bestimmt durch ASTM-D 4020, einer durchschnittlichen Partikelgröße D₅₀ zwischen 300 und 1000 µm und einer Schüttdichte zwischen 0,25 und 0,5 g/ml.

2. Das Pulver des Anspruchs 1, worin das Polyethylen ein Molekulargewicht im Bereich von 400.000 g/mol bis 1.800.000 g/mol, vorzugsweise 500.000 g/mol bis 1.500.000 g/mol wie bestimmt durch ASTM-D 4020 aufweist.

3. Das Pulver des Anspruchs 1 oder des Anspruchs 2 und mit einer durchschnittlichen Partikelgröße D₅₀ zwischen 300 und 800 µm.

4. Das Pulver eines beliebigen der vorstehenden Ansprüche und mit einer Schüttdichte zwischen 0,32 und 0,48 g/m.

5. Das Pulver eines beliebigen der vorstehenden Ansprüche, worin das trockene Polyethylenpulver in einer Zeitspanne von nicht mehr als 15 Sekunden durch eine 15 mm-Düse fließt.

6. Ein Verfahren zur Herstellung des in einem beliebigen der vorstehenden Ansprüche beanspruchten Polyethylenpulvers, das Verfahren enthaltend das Polymerisieren von Ethylen in der Suspensionsphase (Slurry-Phase) mit einem geträgerten Ziegler-Natta-Katalysatorsystem enthaltend Titan und Aluminium und mit einer mittleren Partikelgröße D₅₀ zwischen 10 und 60 µm, vorzugsweise zwischen 15 und 40 µm, noch bevorzugter zwischen 15 und 35 µm.

7. Das Verfahren des Anspruchs 6, worin das Katalysatorsystem einen Partikel-Träger enthaltend Siliziumdioxid und/oder Magnesiumchlorid enthält.

8. Das Verfahren des Anspruchs 6 oder des Anspruchs 7, worin das atomare AI:Ti-Verhältnis des Katalysatorsystems etwa 1:1 bis etwa 50:1 beträgt.

9. Ein poröser Artikel hergestellt durch Sinterung des in einem beliebigen der Ansprüche 1 bis 5 beanspruchten Polyethylenpulvers, worin der gesinterte Artikel eine Porosität von mindestens 45% und einen Druckabfall von weniger als 5 mbar, vorzugsweise weniger als 4 mbar, noch bevorzugter weniger als 2 mbar aufweist.

10. Der Artikel des Anspruchs 9 und mit einer durchschnittlichen Porengröße von mindestens 100 µm, vorzugsweise 100 bis 200 µm.

11. Der Artikel des Anspruchs 9 oder des Anspruchs 10, worin besagte Sinterung bei einer Temperatur zwischen etwa 140°C und etwa 300°C für eine Zeit von etwa 25 bis etwa 100 Minuten durchgeführt wird.

12. Verwendung des in einem beliebigen der Ansprüche 9 bis 11 beanspruchten Artikels in einem Lüfter für Abwasser.

13. Verwendung des in einem beliebigen der Ansprüche 9 bis 11 beanspruchten Artikels in einer Spitze für ein Schreibinstrument.

14. Verwendung des in einem beliebigen der Ansprüche 9 bis 11 beanspruchten Artikels in einem Filterelement.

15. Ein Kohleblockfilter hergestellt durch Sintern einer Mischung enthaltend das in einem beliebigen der Ansprüche 1 bis 5 beanspruchte Polyethylenpulver und Kohlenstoffpartikel.

## Revendications

1. Poudre de polyéthylène ayant une masse moléculaire dans la plage de 300 000 g/mol à 2 000 000 g/mol telle que déterminée par ASTM-D 4020, une dimension moyenne de particule, D₅₀, entre 300 et 1000 µm et une masse volumique apparente entre 0,25 et 0,5 g/ml.

2. Poudre selon la revendication 1, dans laquelle le polyéthylène a une masse moléculaire dans la plage de 400 000 g/mol à 1 800 000 g/mol, de préférence 500 000 g/mol à 1 500 000 g/mol, telle que déterminée par ASTM-D 4020.

3. Poudre selon la revendication 1 ou la revendication 2 et ayant une dimension moyenne de particule, D₅₀, entre 300 et 800 µm.

4. Poudre selon l'une quelconque des revendications précédentes et ayant une masse volumique apparente entre 0,32 et 0,48 g/m.

5. Poudre selon l'une quelconque des revendications précédentes, dans laquelle la poudre de polyéthylène sèche s'écoule à travers une buse de 15 mm dans une période de pas plus de 15 secondes.

6. Procédé de production de la poudre de polyéthylène selon l'une quelconque des revendications précédentes, le procédé comprenant la polymérisation de l'éthylène dans la phase bouillie avec un système de catalyseur Ziegler-Natta supporté comprenant du titane et de l'aluminium et ayant une dimension moyenne de particule, D₅₀, entre 10 et 60 µm, de préférence entre 15 et 40 µm, de façon davantage préférée entre 15 et 35 µm.

7. Procédé selon la revendication 6, dans lequel le système de catalyseur comprend un support particulaire comprenant de la silice et/ou du chlorure de magnésium.

8. Procédé selon la revendication 6 ou la revendication 7, dans lequel le rapport atomique Al:Ti du système de catalyseur est d'environ 1:1 à environ 50:1.

9. Article poreux obtenu par frittage de la poudre de polyéthylène selon l'une quelconque des revendications 1 à 5, dans lequel l'article fritté a une porosité d'au moins 45 % et une perte de charge inférieure à 5 mbar, de préférence inférieure à 4 mbar, de façon davantage préférée inférieure à 2 mbar.

10. Article selon la revendication 9 et ayant une dimension moyenne de pore d'au moins 100 µm, de préférence de 100 à 200 µm.

11. Article selon la revendication 9 ou la revendication 10, dans lequel ledit frittage est conduit à une température entre environ 140°C et environ 300°C pendant une durée d'environ 25 à environ 100 minutes.

12. Utilisation de l'article selon l'une quelconque des revendications 9 à 11 dans un aérateur pour eau usée.

13. Utilisation de l'article selon l'une quelconque des revendications 9 à 11 dans une pointe pour un instrument d'écriture.

14. Utilisation de l'article selon l'une quelconque des revendications 9 à 11 dans un élément de filtration.

15. Filtre de bloc de carbone obtenu par frittage d'un mélange comprenant la poudre de polyéthylène selon l'une quelconque des revendications 1 à 5 et des particules de carbone.
